# EUROPEAN PATENT APPLICATION

(11) **EP 4 576 304 A1**
(43) Date of publication of application: **25.06.2025**
(21) Application number: 23865816.5
(22) Date of filing: 12.09.2023
(51) Int. Cl.: H01M 10/0567, H01M 10/42, H01M 10/0568, H01M 10/0569, H01M 10/052

(54) **ELECTROLYTE ADDITIVE, AND ELECTROLYTE FOR LITHIUM METAL BATTERY OR LITHIUM-ION BATTERY, COMPRISING SAME**

(30) Priority: 14.09.2022 KR 20220115594
(71) Applicant: Graphenide Technology Co., Ltd., Seoul 06978 (KR)
(72) Inventor: SHIN, Ik Soo, Seoul 03631 (KR)
(74) Representative: V.O.
(86) International application number: PCT/KR2023/013608
(87) International publication number: WO 2024/058519

(57) **Abstract**

The present disclosure relates to an electrolyte additive for a lithium metal battery or a lithium-ion battery. Since the electrolyte additive for a lithium metal battery or a lithium-ion battery provides uniform nucleation sites for lithium ions, dendrite (lithium dendrite) formation can be inhibited and, thus, the performance and safety of a lithium metal battery or a lithium-ion battery can be improved.

## Description

### [Technical Field]

The present disclosure relates to an electrolyte additive, an electrolyte containing the same, and a lithium metal battery or a lithium-ion battery containing the same.

### [Background Art]

With the advent of the age of BoT (battery of things) in which all things including electric vehicles, wearable devices, etc. are connected by a battery, the demand on energy storage devices with high energy density, long life span and high safety level is increasing. In particular, with the rapid growth of a market for electric vehicles, lithium-ion batteries are being used a lot. However, the lithium-ion batteries show limitations for application to high-energy devices due to low energy density.

A lithium metal battery, which exhibits a low electrochemical potential (-3.04 V vs. standard hydrogen electrode (SHE)) and a very high theoretical capacity (3,860 mAh/g), is recognized as the most promising next-generation battery since it can overcome the limitations of the lithium-ion battery and the lithium metal is the lightest metal. However, the electrochemical instability of the lithium metal electrode and the unbalanced concentration of lithium ions during the initial cycle are the main cause of nonuniform lithium electrodeposition. This leads to a severe safety problem due to lithium dendrite formation caused by electrodeposition and dissolution of lithium during repeated charge/discharge cycles.

FEC (fluoroethylene carbonate), VC (vinylene carbonate), etc., which form a solid-electrolyte interphase (SEI) layer containing LiF, have been commercialized as electrolyte additives to prevent the lithium dendrite formation. However, FEC has the problem that it causes the decline of battery performance by promoting the generation of corrosive HF or CO₂ gas in a LiPF₆-based electrolyte system, and VC is limited in that it increases resistance at the electrode interface during the formation of the SEI by generating rigid poly-VC species.

Therefore, it is necessary to develop a technology for an electrode additive for a lithium secondary battery, which can prevent lithium dendrite formation without decline in the performance and interfacial resistance of the battery.

### [References of Related Art]

### [Patent Documents]

(Patent document 1) Korean Patent Registration No. 10-2131891.

### [Disclosure]

### [Technical Problem]

The present disclosure is directed to providing an electrolyte additive in which a 0-dimensional carbon nanoparticle anion and a lithium cation exist as a solid salt and/or an ionic compound, which can be introduced into an electrolyte for a lithium metal battery or a lithium-ion battery to prevent the formation of lithium metal dendrites.

### [Technical Solution]

An aspect of the present disclosure provides an electrolyte additive for a lithium metal battery or a lithium-ion battery, which contains an ionic compound composed of: a 0-dimensional carbon nanoparticle anion; and a lithium cation.

Another aspect of the present disclosure provides an electrolyte for a lithium metal battery or a lithium-ion battery, which contains: the electrolyte additive for a lithium metal battery or a lithium-ion battery; and an organic solvent.

Another aspect of the present disclosure provides a lithium metal battery or a lithium-ion battery, which includes: a negative electrode; a positive electrode; and the electrolyte for a lithium metal battery or a lithium-ion battery located between the negative electrode and the positive electrode.

Another aspect of the present disclosure provides a method for preparing an electrolyte for a lithium metal battery or a lithium-ion battery, which includes: (A) a step of preparing a 0-dimensional carbon nanoparticle by mixing and reacting a carbon material and an acidic solution; (B) a step of preparing an ionic compound by mixing and reacting the 0-dimensional carbon nanoparticle and a lithium precursor; and (C) a step of preparing an electrolyte for a lithium metal battery or a lithium-ion battery by dissolving the ionic compound in an organic solvent.

### [Advantageous Effects]

An electrolyte additive for a lithium metal battery or a lithium-ion battery according to the present disclosure provides uniform nucleation sites for lithium ions during charging due to the surface functional groups of 0-dimensional carbon nanoparticle anions, and may significantly inhibit the formation of lithium dendrites by compensating for nonuniform lithium deposition/desorption due to high lithium-ion mobility. In addition, high stability is ensured because it is not corroded and does not generate a gas even when dissolved in a liquid electrolyte.

### [Brief Description of Drawings]

FIG. 1 illustrates a method for preparing an ionic compound (Li-GQD) in Example 1.
FIGS. 2A to 2B show (a) the overpotential of Li/Li symmetric cells using electrolytes prepared in Example 1 (40 mM Li-GQD), Comparative Example 1 (1 M LiPF₆) and Comparative Example 2 (1.04 M LiPF₆) depending on time and cycle number at a current density of 1 mAcm⁻², and (b) the overpotential of the Li/Li symmetric cells using electrolytes prepared in Example 1 (40 mM Li-GQD) and Comparative Example 1 (1 M LiPF₆) depending on time and cycle number at a current density of 2 mAcm⁻².
FIGS. 3A to 3B show (a) the overpotential of the Li/Li symmetric cells using the electrolytes prepared in Example 1 (40 mM Li-GQD), Comparative Example 1 (1 M LiPF₆) and Comparative Example 2 (1.04 M LiPF₆) depending on time and cycle number at a current density of 1 mAcm⁻², and (b) the overpotential of the Li/Li symmetric cells using the electrolytes prepared in Example 1 (40 mM Li-GQD) and Comparative Example 1 (1 M LiPF₆) depending on time and cycle number at a current density of 2 mAcm⁻².
FIGS. 4A to 4D show a result of EIS for the Li/Li symmetric cells using the electrolytes prepared in Example 1 (40 mM Li-GQD) and Comparative Example 1 (1 M LiPF₆) (a) initially, (b) after the first cycle, (c) after the 50th cycle, and (d) after the 300th cycle.
FIGS. 5A to 5B show (a) the voltage during the first cycle, and (b) coulombic efficiency depending on cycle number of Li/Cu half-cells using electrolytes prepared in Example 1 (40 mM Li-GQD) and Comparative Example 1 (1 M LiPF₆).
FIGS. 6A to 6B show the scanning electron microscopy (SEM) images of the Li/Cu half-cells using the electrolytes prepared in (a) Comparative Example 1 (1 M LiPF₆) and (b) Example 1 (40 mM Li-GQD) obtained after conducing electrodeposition and electrodissolution for 10 hours at a current density of 0.1 mAcm⁻².
FIGS. 7A to 7C show (a, c) the discharge capacity and coulombic efficiency, and (b) retention rate of Li/NMC cells using the electrolytes prepared in Example 1 (40 mM Li-GQD) and Comparative Example 1 (1 M LiPF₆) depending on cycle number.

### [Best Mode]

Hereinafter, the present disclosure will be described more specifically referring to the attached drawings and examples.

An aspect of the present disclosure provides an electrolyte additive containing an ionic compound composed of: a 0-dimensional carbon nanoparticle anion; and a lithium cation. The electrolyte additive may be for a lithium secondary battery selected from a lithium metal battery and a lithium-ion battery. Specifically, it may be for a lithium metal battery.

As mentioned above, the lithium metal battery has a severe safety problem in which dendrites are formed at the lithium metal electrode due to repeated deposition/desorption of lithium and unstable solid-electrolyte interface (SEI), resulting in short circuit of the battery. Although electrolyte additives have been developed to solve this problem, the existing electrolyte additives are not practically applicable to the lithium metal battery because they generate corrosive gases or increase interfacial resistance. However, the electrolyte additive of the present disclosure, which contains an ionic compound composed of: a 0-dimensional carbon nanoparticle anion; and a lithium cation, can significantly prevent the formation of lithium dendrites without generating corrosive gases or increasing interfacial resistance.

The ionic compound is a solid compound formed through electrostatic bonding between the lithium cation and the 0-dimensional carbon nanoparticle anion, and it improves the performance and safety of the battery by preventing dendrite formation on the surface of the lithium metal electrode without generating corrosive gases since it is dissolved in existing liquid electrolytes.

The 0-dimensional carbon nanoparticle refers to a carbon nanoparticle with a size smaller than 20 nm, wherein oxygen-containing anionic groups are present on the surface and/or edge. The 0-dimensional carbon nanoparticle exhibits the characteristic of a 0-dimensional carbon quantum dot, in which fluorescence wavelength depends on the size.

The ionic compound is ionized well because of a low lattice energy. Whereas the anion is relatively fixed due to a large size, the lithium cation is relatively mobile due to a small size. Because of the increased mobility of lithium, the nonuniform deposition/desorption of lithium can be compensated for and the dendrite formation can be prevented.

In addition, the ionic compound can form a uniform solid-electrolyte interface (SEI) on the lithium metal surface and improve its conductivity.

The 0-dimensional carbon nanoparticle anion may be derived from any one selected from a group consisting of carbon nanofiber, graphene, graphene oxide, carbon nanotube, fullerene and carbon black. Specifically, it may be derived from carbon nanofiber. Particularly, carbon nanofiber is advantageous in that it exhibits good productivity, is inexpensive, and has high specific surface area. In addition, since it has a core structure consisting only of sp₂-bonded carbon as the starting material of the 0-dimensional carbon nanoparticle anion, it can be advantageously synthesized into 0-dimensional carbon nanoparticles of various sizes and shapes.

The 0-dimensional carbon nanoparticle anion may contain one or more anionic functional group selected from a group consisting of a hydroxy group, an ether group, an aldehyde group, an epoxy group, an amide group, a carboxylic group and a ketone group. The lithium cation may be bonded to the anionic functional group to form an ionic compound.

The molar ratio of the 0-dimensional carbon nanoparticle anion and the lithium cation may be 1:3 to 8, specifically 1:5 to 7, more specifically 1:5.3 to 6.7, most specifically 1:5.5 to 6.5. If the molar ratio of the lithium cation is below the lower limit per 1 mol of the 0-dimensional carbon nanoparticle anion, the effect as the electrolyte additive cannot be expected. Conversely, if it exceeds the upper limit, single-molecule impurity anions may be adsorbed to the 0-dimensional carbon nanoparticles, leading to decline in dispersibility in the organic solvent, and decline in performance due to side reactions at the electrode.

Another aspect of the present disclosure provides an electrolyte for a lithium metal battery or a lithium-ion battery, which contains the electrolyte additive; and an organic solvent.

The organic solvent may be one or more selected from a group consisting of ethylene carbonate, ethyl methyl carbonate, propylene carbonate, butylene carbonate, vinylene carbonate, vinylethylene carbonate, fluoroethylene carbonate, dimethyl carbonate, diethyl carbonate, dipropyl carbonate, ethyl methyl carbonate, methyl propyl carbonate, methyl isopropyl carbonate, ethyl propyl carbonate, 1,2-dimethoxyethane, 1,3-dioxolane and dimethyl sulfoxide.

The electrolyte for a lithium metal battery or a lithium-ion battery may further contain one or more lithium salt selected from a group consisting of LiPF₆, LiBF₄, LiSbF₆, LiAsF₆, LiClO₄, LiN(C₂F₅SO₂)₂, LiN(CF₃SO₂)₂, CF₃SO₃Li, LiC(CF₃SO₂)₃ and LiC₄BO₈.

The electrolyte additive may be contained at a concentration of 0.01 to 0.1 M, specifically 0.02 to 0.08 M, more specifically 0.025 to 0.06 M, most specifically 0.03 to 0.05 M. If the concentration of the electrolyte additive is below the lower limit, lithium dendrite formation may not be prevented. Conversely, if it exceeds the upper limit, the ion conductivity of the electrolyte may decrease.

Li transference number is defined as the fraction of the total electric current carried by lithium ions. The existing liquid electrolytes had a Li transference number smaller than 0.5. Since the electrolyte additive for a lithium metal battery or a lithium-ion battery of the present disclosure can significantly reduce concentration polarization and dendrite formation of an electrolyte, an electrolyte containing the same may have a Li transference number of 0.55 or larger, specifically 0.6 or larger, more specifically 0.65 or larger, most specifically 0.66 or larger. If the Li transference number is smaller than the lower limit, lithium dendrites may be formed because the irregular electrodeposition and desorption of lithium are not compensated for sufficiently due to the low mobility of lithium ions.

According to the most specific exemplary embodiment of the present disclosure, ① the 0-dimensional carbon nanoparticle anion may be derived from carbon nanofiber, ② the 0-dimensional carbon nanoparticle anion may contain a hydroxy group and a carboxylic group, ③ the molar ratio of the 0-dimensional carbon nanoparticle anion and the lithium cation may be 1:5.5 to 6.5, ④ the organic solvent may be a mixture of ethylene carbonate and ethyl methyl carbonate at a volume ratio 1:2 to 2.6, ⑤ the electrolyte for a lithium metal battery or a lithium-ion battery may contain LiPF₆ at a concentration of 0.9 to 1.1 M, ⑥ the electrolyte additive may be contained at a concentration of 0.03 to 0.05 M, and ⑦ the Li transference number of the electrolyte for a lithium metal battery or a lithium-ion battery may be 0.66 or larger.

It was confirmed that, when the electrolyte for a lithium metal battery or a lithium-ion battery according to the present disclosure satisfies the seven conditions of the most specific exemplary embodiment described above, ion conductivity is improved significantly, the stability of the electrode is improved, and side reactions with the electrolyte can be prevented because the solid-electrolyte interface is formed uniformly and firmly on the lithium electrode, when it is used as an electrolyte for a lithium metal battery. But, when any of the above seven conditions was not satisfied, it was confirmed that the stability of the electrode is decreased due to side reactions during repeated charge and discharge.

The present disclosure is also directed to providing a lithium metal battery or a lithium-ion battery, which includes: a negative electrode; a positive electrode; and the electrolyte for a lithium metal battery or a lithium-ion battery located between the negative electrode and the positive electrode.

The lithium metal battery or lithium-ion battery according to the present disclosure may exhibit superior electrochemical characteristics and stability because the formation of lithium dendrites can be prevented since the electrolyte containing the electrolyte additive for a lithium metal battery or a lithium-ion battery can form a uniform and stable solid-electrolyte interface on the lithium metal negative electrode.

For a lithium metal battery, the negative electrode may be a lithium metal.

The present disclosure is also directed to providing a method for preparing an electrolyte for a lithium metal battery or a lithium-ion battery, which includes: (A) a step of preparing a 0-dimensional carbon nanoparticle by mixing and reacting a carbon material and an acidic solution; (B) a step of preparing an ionic compound by mixing and reacting the 0-dimensional carbon nanoparticle and a lithium precursor; and (C) a step of preparing an electrolyte for a lithium metal battery or a lithium-ion battery by dissolving the ionic compound in an organic solvent.

### (A) Preparation of 0-dimensional carbon nanoparticle by mixing and reacting carbon material and acidic solution

The carbon material may be one or more selected from a group consisting of carbon nanofiber, graphene, graphene oxide, carbon nanotube, fullerene and carbon black. Most specifically, it may be carbon nanofiber.

The acidic solution may be a mixture of a nitric acid solution with a concentration of 31 to 50 wt% and a sulfuric acid solution with a concentration of 90 to 99 wt% at a volume ratio of 1:2 to 4, specifically a mixture of a nitric acid solution with a concentration of 33 to 47 wt% and a sulfuric acid solution with a concentration of 91 to 99 wt% at a volume ratio of 1:2.1 to 3.8, more specifically a mixture of a nitric acid solution with a concentration of 35 to 45 wt% and a sulfuric acid solution with a concentration of 92 to 99 wt% at a volume ratio of 1:2.3 to 3.7, most specifically a mixture of a nitric acid solution with a concentration of 36 to 43 wt% and a sulfuric acid solution with a concentration of 93 to 98 wt% at a volume ratio of 1:2.5 to 3.5.

The acidic solution may be mixed in an amount of 140 to 180 mL, specifically 147 to 177 mL, more specifically 150 to 170 mL, most specifically 155 to 165 mL, per 5 g of the carbon material. If the acidic solution is mixed in an amount less than 140 mL per 5 g of the carbon material, the 0-dimensional carbon nanoparticle may not be prepared. Conversely, if the acidic solution is mixed in an amount exceeding 180 mL, excessive time and cost may be required to remove the acidic solution afterwards.

The reaction in the step (A) may be performed at 80 to 130 °C for 18 to 30 hours, specifically at 85 to 120 °C for 20 to 28 hours, more specifically at 90 to 110 °C for 21 to 27 hours, most specifically at 95 to 105 °C for 22 to 26 hours. If any of the reaction temperature and time in the step (A) is below the lower limit, the 0-dimensional carbon nanoparticle may not be prepared sufficiently. Conversely, if it exceeds the upper limit, the characteristics of a 0-dimensional quantum dot may not be exhibited due to increased size of the prepared carbon nanoparticle, or dispersibility may be decreased due to aggregation and it may be difficult to expect the effect of the electrolyte additive.

The 0-dimensional carbon nanoparticle may contain one or more anionic functional group selected from a group consisting of a hydroxy group, an ether group, an aldehyde group, an epoxy group, an amide group, a carboxylic group and a ketone group.

### (B) Preparation of ionic compound by mixing and reacting 0-dimensional carbon nanoparticle and lithium precursor

The lithium precursor may be one or more selected from a group consisting of lithium hydroxide, lithium fluoride and lithium carbonate. Most specifically, it may be lithium carbonate.

The 0-dimensional carbon nanoparticle and the lithium precursor may be mixed such that the molar ratio of the lithium to the 0-dimensional carbon nanoparticle is 1:3 to 8, specifically 1:5 to 7, more specifically 1:5.3 to 6.7, most specifically 1:5.5 to 6.5.

The reaction in the step (B) may be performed at 15 to 35 °C for 18 to 30 hours, specifically at 18 to 32 °C for 20 to 28 hours, more specifically at 20 to 30 °C for 21 to 27 hours, most specifically at 22 to 27 °C for 22 to 26 hours. If any of the reaction time and temperature in the step (B) is below the lower limit, the lithium cation content of the prepared ionic compound may decrease. Conversely, if it exceeds the upper limit, reaction rate may decrease significantly or the yield of the ionic compound may decrease.

### (C) Preparation of electrolyte for lithium metal battery or lithium-ion battery by dissolving ionic compound in organic solvent

The organic solvent may be one or more selected from a group consisting of ethylene carbonate, ethyl methyl carbonate, propylene carbonate, butylene carbonate, vinylene carbonate, vinylethylene carbonate, fluoroethylene carbonate, dimethyl carbonate, diethyl carbonate, dipropyl carbonate, ethyl methyl carbonate, methyl propyl carbonate, methyl isopropyl carbonate, ethyl propyl carbonate, 1,2-dimethoxyethane, 1,3-dioxolane and dimethyl sulfoxide. Specifically, it may be a mixture of ethylene carbonate (EC) and ethyl methyl carbonate (EMC).

In addition, the electrolyte for a lithium metal battery or a lithium-ion battery may further contain one or more lithium salt selected from a group consisting of LiPF₆, LiBF₄, LiSbF₆, LiAsF₆, LiClO₄, LiN(C₂F₅SO₂)₂, LiN(CF₃SO₂)₂, CF₃SO₃Li, LiC(CF₃SO₂)₃ and LiC₄BO₈. Most specifically, the lithium salt may be LiPF₆.

The ionic compound may be contained at a concentration of 0.01 to 0.1 M, specifically 0.02 to 0.08 M, more specifically 0.025 to 0.06 M, most specifically 0.03 to 0.05 M, in the electrolyte for a lithium metal battery or a lithium-ion battery.

The Li transference number of the electrolyte for a lithium metal battery or a lithium-ion battery may be 0.55 or larger, specifically 0.6 or larger, more specifically 0.65 or larger, most specifically 0.66 or larger.

Although not described explicitly in the examples and comparative examples given below, electrolytes for a lithium metal battery were prepared while varying conditions as follows, and the capacity retention rate of lithium metal batteries using the same were measured after 1500 cycles of charge and discharge.

As a result, it was confirmed that the capacity retention rate was maintained high as 80% or higher even after 1500 cycles of charge and discharge when all of the following conditions were satisfied, because the formation of lithium dendrites was prevented significantly:
the carbon material is carbon nanofiber,
the acidic solution is a mixture of nitric acid solution with a concentration of 36 to 43 wt% and a sulfuric acid solution with a concentration of 93 to 98 wt% at a volume ratio of 1:2.5 to 3.5,
the acidic solution is mixed in an amount of 155 to 165 mL per 5 g of the carbon material,
the reaction in the step (A) is performed at 95 to 105 °C for 22 to 26 hours,
the 0-dimensional carbon nanoparticle contains a hydroxy group and a carboxylic group,
the lithium precursor is lithium carbonate,
the 0-dimensional carbon nanoparticle and the lithium precursor are mixed such that the molar ratio of the lithium to the 0-dimensional carbon nanoparticle is 1:5.5 to 6.5,
the reaction in the step (B) is performed at 22 to 27 °C for 22 to 26 hours,
the organic solvent is a mixture of ethylene carbonate and ethyl methyl carbonate at a volume ratio of 1:2 to 2.6,
the electrolyte for a lithium metal battery or a lithium-ion battery further contains LiPF₆ at a concentration of 0.9 to 1.1 M,
the ionic compound is contained at a concentration of 0.03 to 0.05 M, and
the Li transference number of the electrolyte for a lithium metal battery or a lithium-ion battery is 0.66 or larger.

But, when any of the above conditions was not satisfied, the capacity retention rate was low as 60% or lower after 1500 cycles of charge and discharge because the charge/discharge capacity was decreased rapidly.

Hereinafter, the present disclosure will be described more specifically through examples, etc. However, it should not be interpreted that the scope and content of the present disclosure are limited by the examples, etc.

### Example 1

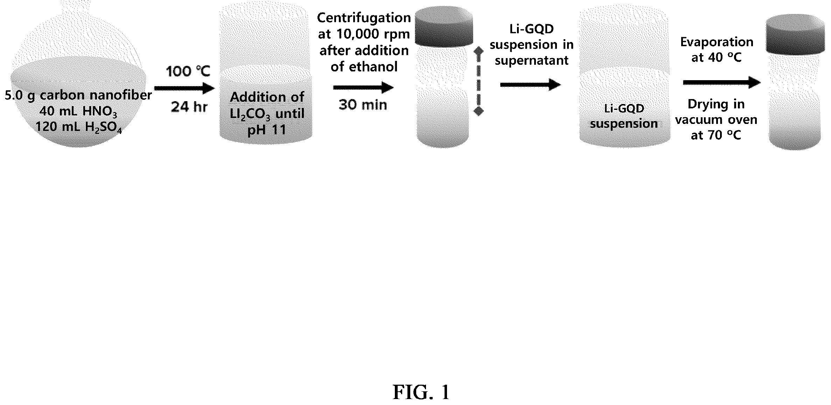

FIG. 1 illustrates a method for preparing an ionic compound (Li-GQD) according to the present disclosure. Hereinafter, the process for preparing Li-GQD will be described referring to FIG. 1.

### Preparation of electrolyte additive

### (1) Oxidation (cutting)

0.5 g of a 0-dimensional carbon nanoparticle was prepared by mixing 5.0 g of carbon nanofiber, 40 mL of a nitric acid (HNO₃) solution with a concentration of 38 wt% and 120 mL of a sulfuric acid solution with a concentration of 98 wt%, and refluxing the mixture at 100 °C for 24 hours. The prepared 0-dimensional carbon nanoparticle had a size of 6 nm, and hydroxyl and carboxylic functional groups were present on the surface.

### (2) Lithiation

Then, after cooling the refluxed mixture to room temperature, 1.62 mol of lithium carbonate (Li₂CO₃) was added until the pH of the mixture reached 11, and the mixture was maintained at 24 °C for 24 hours. Subsequently, after adding ethanol of 2 times the volume of the mixture 24 hours later, the mixture was centrifuged at 10,000 rpm for 30 minutes. The centrifugation was repeated until no pellet was formed. Then, a suspended ionic compound (Li-GQD) was obtained from the supernatant. The molar ratio of 0-dimensional carbon nanoparticle anion:lithium cation in the ionic compound was 1:6.

### (3) Post-treatment

After concentrating the obtained Li-GQD using a rotatory evaporator at 40 °C, a Li-GQD powder was obtained by drying the same in a vacuum oven at 70 °C.

### Preparation of electrolyte solution

After preparing a mixture solution in which LiPF₆ was dissolved at 1 M in an organic solvent mixture of ethylene carbonate:ethyl methyl carbonate (EC:EMC) at a volume ratio of 3:7, an electrolyte was prepared by dissolving the Li-GQD in the mixture solution to 40 mM (0.04 M).

### Comparative Example 1

An electrolyte was prepared by dissolving LiPF₆ in an ethylene carbonate:ethyl methyl carbonate(EC:EMC) organic solvent mixture of ethylene carbonate:ethyl methyl carbonate (EC:EMC) at a volume ratio of 3:7 to 1 M.

### Comparative Example 2

An electrolyte was prepared by dissolving LiPF₆ in an ethylene carbonate:ethyl methyl carbonate(EC:EMC) organic solvent mixture of ethylene carbonate:ethyl methyl carbonate (EC:EMC) at a volume ratio of 3:7 to 1.04 M.

### Test Example 1. Test of overpotential of Li/Li symmetric cells

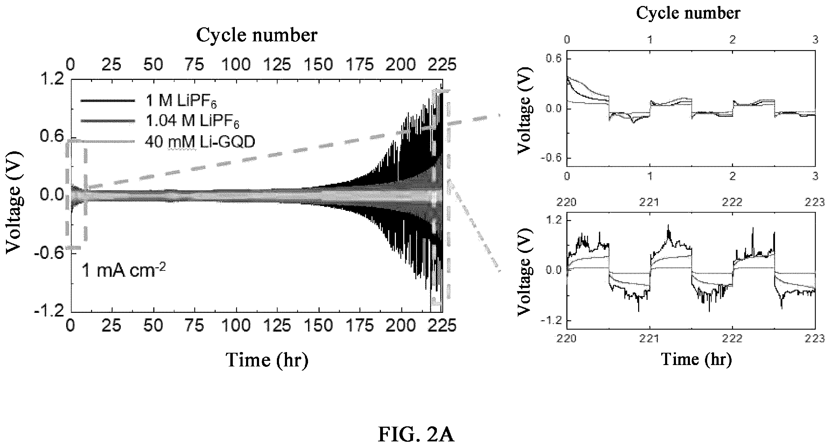

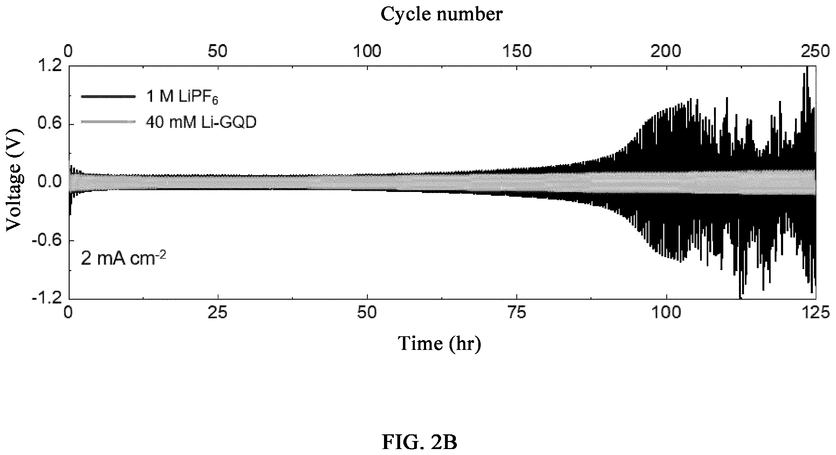

A 2032 coin-type Li/Li symmetric cell was prepared using the electrolyte prepared in Example 1, Comparative Example 1 or Comparative Example 2, a lithium metal electrode (200 µm), a polymer separator (Celgard 2400) and a lithium metal electrode (200 µm). The result of measuring the overpotential of the prepared Li/Li symmetric cell depending on time and cycles is shown in FIGS. 2A and 2B.

FIG. 2A and 2B show (a) the overpotential of Li/Li symmetric cells using electrolytes prepared in Example 1 (40 mM Li-GQD), Comparative Example 1 (1 M LiPF₆) and Comparative Example 2 (1.04 M LiPF₆) depending on time and cycle number at a current density of 1 mAcm⁻², and (b) the overpotential of the Li/Li symmetric cells using electrolytes prepared in Example 1 (40 mM Li-GQD) and Comparative Example 1 (1 M LiPF₆) depending on time and cycle number at a current density of 2 mAcm⁻².

As shown in FIGS. 2A and 2B, the Li/Li symmetric cell in which the electrolyte additive of the present disclosure prepared in Example 1 was used showed superior cycle stability even after operation for a long time. In addition, referring to FIG. 2A, whereas it showed a stable voltage profile during initial cycles, the symmetric cells using the electrolytes of Comparative Example 1 and Comparative Example 2 showed unstable voltage profiles during initial cycles. This indicates that lithium dendrites were formed in the Li/Li symmetric cells of the comparative examples.

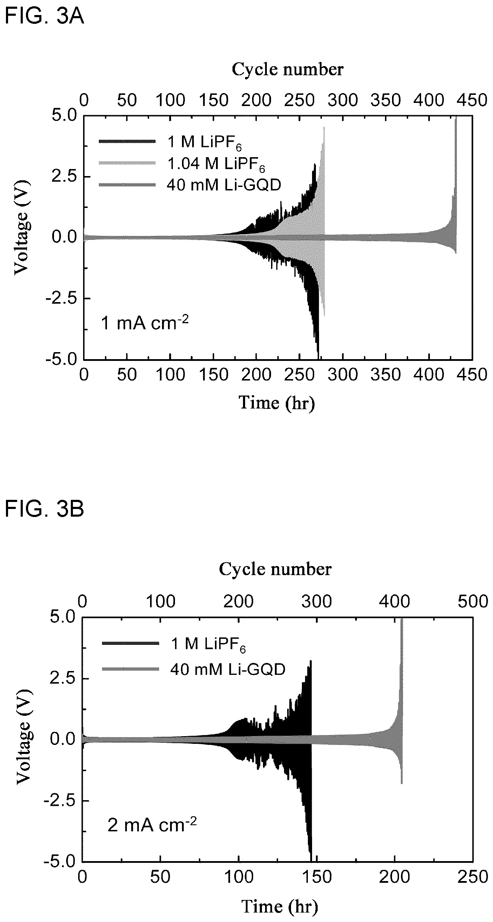

FIGS. 3A and 3B show (a) the overpotential of the Li/Li symmetric cells using the electrolytes prepared in Example 1 (40 mM Li-GQD), Comparative Example 1 (1 M LiPF₆) and Comparative Example 2 (1.04 M LiPF₆) depending on time and cycle number at a current density of 1 mAcm⁻², and (b) the overpotential of the Li/Li symmetric cells using the electrolytes prepared in Example 1 (40 mM Li-GQD) and Comparative Example 1 (1 M LiPF₆) depending on time and cycle number at a current density of 2 mAcm⁻².

As shown in FIGS. 3A and 3B, the short circuit of the battery occurred at 195 and 190 cycles for Comparative Example 1, at current densities of 1 mAcm⁻² and 2 mAcm⁻², and at 225 cycles for Comparative Example 2 (1 mAcm⁻²). In contrast, for Example 1, the short circuit of the battery occurred at 420 and 390 cycles at current densities of 1 mAcm⁻² and 2 mAcm⁻², respectively, showing that the electrolyte additive of the present disclosure can improve cycle stability significantly.

### Test Example 2. Measurement of electrochemical impedance (EIS) of Li/Li symmetric cells

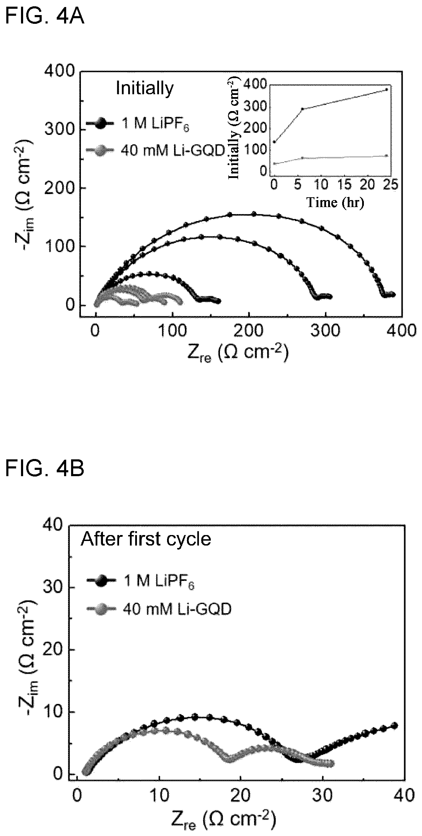

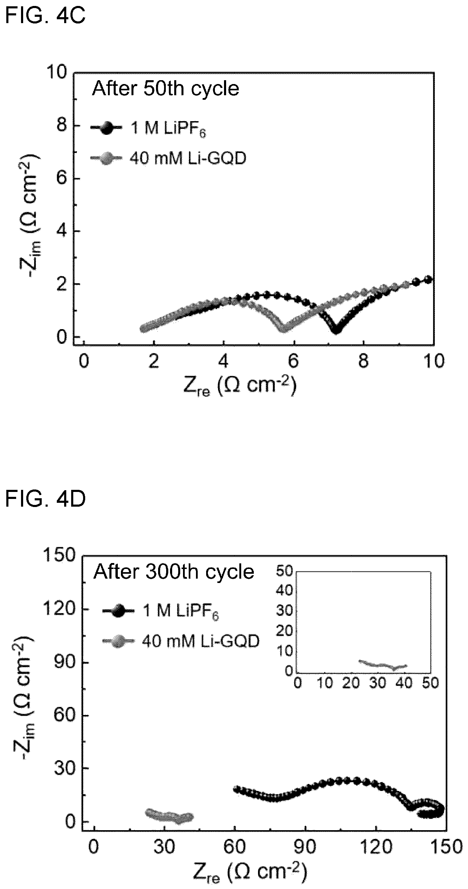

The result of measuring the electrochemical impedance (EIS) of the Li/Li symmetric cells prepared in Test Example 1 is shown in FIGS. 4A to 4D.

FIGS. 4A to 4D show the result of EIS for the Li/Li symmetric cells using the electrolytes prepared in Example 1 (40 mM Li-GQD) and Comparative Example 1 (1 M LiPF₆) (a) initially, (b) after the first cycle, (c) after the 50th cycle, and (d) after the 300th cycle.

As shown in FIGS. 4A to 4D, the Li/Li symmetric cell using the electrolyte additive of Example 1 showed a smaller resistance and a higher ion conductivity due to a smaller indicating R_{SEI}. Through this, it can be seen that the electrolyte additive according to the present disclosure can significantly prevent the formation of dendrites in the lithium metal battery and decrease resistance by improving the conductivity of the solid-electrolyte interphase (SEI).

In addition, the result of measuring the Li transference number of the Li/Li symmetric cell prepared in Test Example 1 is shown in Table 1.

**[Table 1]**

| | Li transference number |
|---|---|
| Comparative Example 1 | 0.34 |
| Example 1 | 0.67 |

As shown in Table 1, the Li transference number of the electrolyte for a lithium metal battery additive according to the present disclosure was improved by about 2 times as compared to that of Comparative Example 1 due to high mobility of lithium. Through this, it can be seen that the electrolyte of Example 1 improves the conductivity of the SEI of the lithium electrode due to improved Li transference number and prevents lithium dendrite formation by increasing the nonuniformity of lithium ions by increasing the mobility of lithium.

### Test Example 3. Test of Li/Cu half-cell

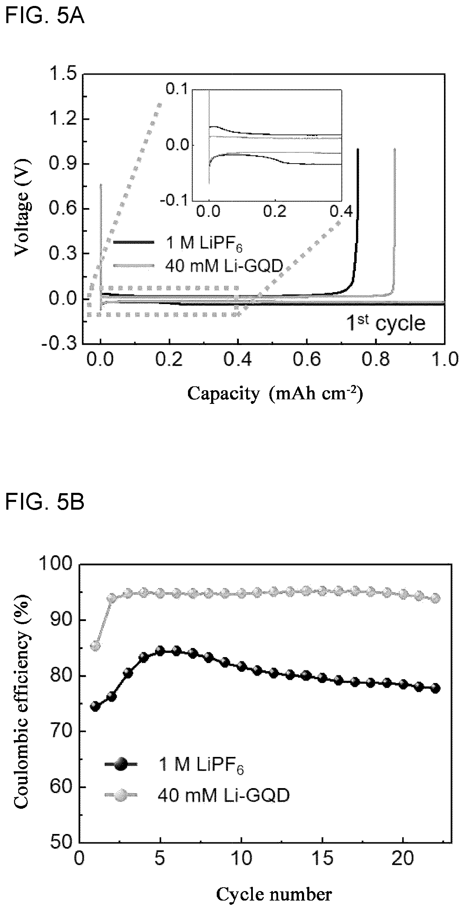

A 2032 coin-type Li/Cu half-cell was prepared using the electrolyte prepared in Example 1, Comparative Example 1 or Comparative Example 2, a copper current collector, a polymer separator (Celgard 2400) and a lithium metal electrode (200 µm), and the voltage and coulombic efficiency depending on cycles were measured. The result is shown in FIGS. 5A and 5B.

FIGS. 5A and 5B show (a) the voltage during the first cycle, and (b) coulombic efficiency depending on cycle number of the Li/Cu half-cells using the electrolytes prepared in Example 1 (40 mM Li-GQD) and Comparative Example 1 (1 M LiPF₆).

As shown in FIGS. 5A and 5B, it can be seen that the electrolyte additive for a lithium metal battery or a lithium-ion battery of the present disclosure increases coulombic efficiency and also improves life span characteristics even after repeated cycles by maintaining the coulombic efficiency at a superior level.

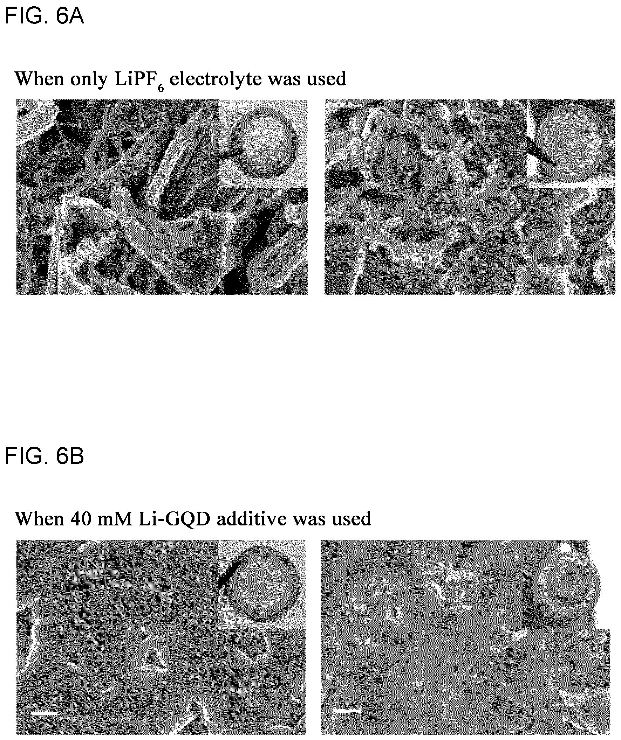

FIGS. 6A and 6B show the scanning electron microscopy (SEM) images of the Li/Cu half-cells using the electrolytes prepared in (a) Comparative Example 1 (1 M LiPF₆) and (b) Example 1 (40 mM Li-GQD) obtained after conducing electrodeposition and electrodissolution for 10 hours at a current density of 0.1 mAcm⁻².

As shown in FIGS. 6A and 6B, whereas dendrites were formed on the lithium metal after repeated cycles for the half-cell using the common electrolyte for a lithium metal battery, the dendrite formation was prevented significantly when the electrolyte for a lithium metal battery additive of Example 1 according to the present disclosure was used.

### Test Example 4. Test of Li/NMC cell

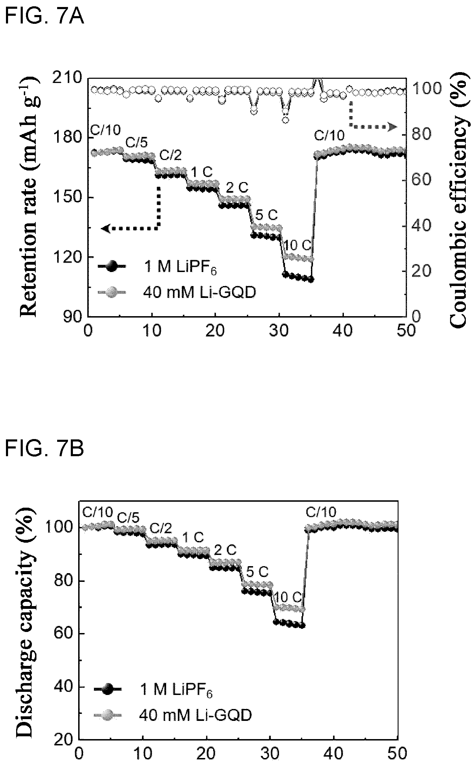

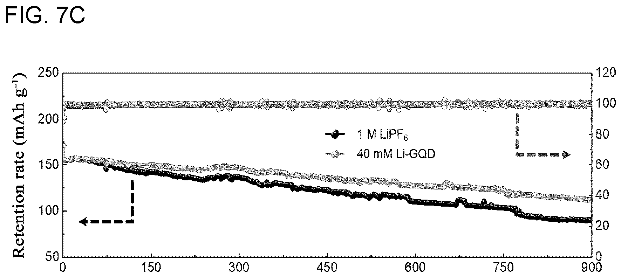

A 2032 coin-type Li/NMC cell was prepared using the electrolyte prepared in Example 1, Comparative Example 1 or Comparative Example 2, a lithium metal (200 µm) negative electrode and a LiNi_{0.5}Mn_{0.2}Co_{0.3}O₂ (NMC523) positive electrode. The NMC523 positive electrode was prepared by coating a slurry consisting of 90% of an active material, 5% of a binder (polyvinylidene fluoride (PVDF)) and 5% of a conductor (super-P), based on weight, on an aluminum current collector. For the prepared Li/NMC cell, discharge capacity depending on cycle number and retention rate, or the ratio of each cycle capacity for the specific capacity during the first cycle at a C-rate of C/10, were measured. The result is shown in FIGS. 7A to 7C.

FIGS. 7A to 7C show (a, c) the discharge capacity and coulombic efficiency, and (b) retention rate of Li/NMC cells using the electrolytes prepared in Example 1 (40 mM Li-GQD) and Comparative Example 1 (1 M LiPF₆) depending on cycle number.

Referring to FIGS. 7A to 7C, it can be seen that the electrolyte for a lithium metal battery additive according to the present disclosure can exhibit high performance as compared to Comparative Example 1 even under the high charge/discharge condition by improving the performance of the lithium metal battery.

## Claims

1. An electrolyte additive for a lithium metal battery or a lithium-ion battery, comprising an ionic compound composed of:
a 0-dimensional carbon nanoparticle anion; and
a lithium cation.

2. The electrolyte additive for a lithium metal battery or a lithium-ion battery according to claim 1, wherein the 0-dimensional carbon nanoparticle anion is derived from any one selected from a group consisting of carbon nanofiber, graphene, graphene oxide, carbon nanotube, fullerene and carbon black.

3. The electrolyte additive for a lithium metal battery or a lithium-ion battery according to claim 1, wherein the 0-dimensional carbon nanoparticle anion is an anion comprising one or more functional group selected from a group consisting of a hydroxy group, an ether group, an aldehyde group, an epoxy group, an amide group, a carboxylic group and a ketone group.

4. The electrolyte additive for a lithium metal battery or a lithium-ion battery according to claim 1, wherein the molar ratio of the 0-dimensional carbon nanoparticle anion and the lithium cation is 1:3 to 8.

5. An electrolyte for a lithium metal battery or a lithium-ion battery, comprising:
the electrolyte additive for a lithium metal battery or a lithium-ion battery according to any of claims 1 to 4; and
an organic solvent.

6. The electrolyte for a lithium metal battery or a lithium-ion battery according to claim 5, wherein the organic solvent is one or more selected from a group consisting of ethylene carbonate, ethyl methyl carbonate, propylene carbonate, butylene carbonate, vinylene carbonate, vinylethylene carbonate, fluoroethylene carbonate, dimethyl carbonate, diethyl carbonate, dipropyl carbonate, ethyl methyl carbonate, methyl propyl carbonate, methyl isopropyl carbonate, ethyl propyl carbonate, 1,2-dimethoxyethane, 1,3-dioxolane and dimethyl sulfoxide.

7. The electrolyte for a lithium metal battery or a lithium-ion battery according to claim 5, wherein the electrolyte additive is comprised at a concentration of 0.01 to 0.1 M.

8. The electrolyte for a lithium metal battery or a lithium-ion battery according to claim 5, wherein the electrolyte additive further comprises one or more lithium salt selected from a group consisting of LiPF₆, LiBF₄, LiSbF₆, LiAsF₆, LiClO₄, LiN(C₂F₅SO₂)₂, LiN(CF₃SO₂)₂, CF₃SO₃Li, LiC(CF₃SO₂)₃ and LiC₄BO₈.

9. The electrolyte for a lithium metal battery or a lithium-ion battery according to claim 5, wherein the Li transference number of the electrolyte for a lithium metal battery or a lithium-ion battery is 0.55 or larger.

10. The electrolyte for a lithium metal battery or a lithium-ion battery according to claim 5, wherein
the 0-dimensional carbon nanoparticle anion is derived from carbon nanofiber,
the 0-dimensional carbon nanoparticle anion comprises a hydroxy group and a carboxylic group,
the molar ratio of the 0-dimensional carbon nanoparticle anion and the lithium cation is 1:5.5 to 6.5,
the organic solvent is a mixture of ethylene carbonate and ethyl methyl carbonate at a volume ratio of 1:2 to 2.6,
the organic solvent comprises LiPF₆ at a concentration of 0.9 to 1.1 M,
the electrolyte additive is comprised at a concentration of 0.03 to 0.05 M, and
the Li transference number of the electrolyte for a lithium metal battery or a lithium-ion battery is 0.66 or larger.

11. A lithium metal battery or a lithium-ion battery comprising:
a negative electrode;
a positive electrode; and
the electrolyte for a lithium metal battery or a lithium-ion battery according to any of claims 5 to 10, located between the negative electrode and the positive electrode.

12. A method for preparing an electrolyte for a lithium metal battery or a lithium-ion battery
(A) a step of preparing a 0-dimensional carbon nanoparticle by mixing and reacting a carbon material and an acidic solution;
(B) a step of preparing an ionic compound by mixing and reacting the 0-dimensional carbon nanoparticle and a lithium precursor; and
(C) a step of preparing an electrolyte for a lithium metal battery or a lithium-ion battery by dissolving the ionic compound in an organic solvent.

13. The method for preparing an electrolyte for a lithium metal battery or a lithium-ion battery according to claim 12, wherein the acidic solution is a mixture of a nitric acid solution with a concentration of 31 to 50 wt% and a sulfuric acid solution with a concentration of 90 to 99 wt% at a volume ratio of 1:2 to 4.

14. The method for preparing an electrolyte for a lithium metal battery or a lithium-ion battery according to claim 12, wherein 140 to 180 mL of the acidic solution is mixed per 5 g of the carbon material.

15. The method for preparing an electrolyte for a lithium metal battery or a lithium-ion battery according to claim 12, wherein the reaction in the step (A) is performed at 80 to 130 °C for 18 to 30 hours.

16. The method for preparing an electrolyte for a lithium metal battery or a lithium-ion battery according to claim 12, wherein the lithium precursor is one or more selected from a group consisting of lithium hydroxide, lithium fluoride and lithium carbonate.

17. The method for preparing an electrolyte for a lithium metal battery or a lithium-ion battery according to claim 12, wherein the 0-dimensional carbon nanoparticle and the lithium precursor are mixed such that the molar ratio of the lithium to the 0-dimensional carbon nanoparticle is 1:3 to 8.

18. The method for preparing an electrolyte for a lithium metal battery or a lithium-ion battery according to claim 12, wherein the reaction in the step (B) is performed at 15 to 35 °C for 18 to 30 hours.

19. The method for preparing an electrolyte for a lithium metal battery or a lithium-ion battery according to claim 12, wherein the ionic compound is comprised in the electrolyte for a lithium metal battery or a lithium-ion battery at a concentration of 0.01 to 0.1 M.

20. The method for preparing an electrolyte for a lithium metal battery or a lithium-ion battery according to claim 12, wherein
the carbon material is carbon nanofiber,
the acidic solution is a mixture of a nitric acid solution with a concentration 36 to 43 wt% and a sulfuric acid solution with a concentration 93 to 98 wt% at a volume ratio of 1:2.5 to 3.5,
the acidic solution is mixed in an amount of 155 to 165 mL per 5 g of the carbon material,
the reaction in the step (A) is performed at 95 to 105 °C for 22 to 26 hours,
the 0-dimensional carbon nanoparticle comprises a hydroxy group and a carboxylic group,
the lithium precursor is lithium carbonate,
the 0-dimensional carbon nanoparticle and the lithium precursor are mixed such that the molar ratio of the lithium to the 0-dimensional carbon nanoparticle is 1:5.5 to 6.5,
the reaction in the step (B) is performed at 22 to 27 °C for 22 to 26 hours,
the organic solvent is a mixture of ethylene carbonate and ethyl methyl carbonate at a volume ratio of 1:2 to 2.6,
the electrolyte for a lithium metal battery or a lithium-ion battery further comprises LiPF₆ at a concentration of 0.9 to 1.1 M,
the ionic compound is comprised at a concentration of 0.03 to 0.05 M, and
the Li transference number of the electrolyte for a lithium metal battery or a lithium-ion battery is 0.66 or larger.
